# DEMANDE DE BREVET EUROPEEN

(11) **EP 1 188 364 A1**
(43) Date de publication de la demande: **20.03.2002**
(21) Numéro de dépôt: 00810858.1
(22) Date de dépôt: 20.09.2000
(51) Int. Cl.: A01D 46/24

(54) **Dispositif de cueillette des cerises et de petits fruits**

(30) Priorité: 11.09.2000 CH 17622000
(71) Demandeur: Nam-Trân, Hô, 1024 Ecublens (CH)
(72) Inventeur: Nam-Trân, Hô, 1024 Ecublens (CH)

(57) **Abrégé**

Deux systèmes manuel et électrique de cueillette des cerises et des fruits de petites dimensions contiennent les composantes suivantes:

Le système manuel contient un long tube (1), un coude (2), un entonnoir modifié (3) contenant une lame dentée (4).

Pour le système électrique dont une variance contient un long tube (1), un coude aux bouts femelle et mâle (2), un entonnoir modifié (3), une paire de ciseaux (4), une plaque en plastique (5), un moteur avec son réducteur dans un tube en plastique (6), une carte électronique (7), un accumulateur (8), un interrupteur (9) et un contrepoids (10).

Une autre variance possède un long tube (1), un coude à deux bouts femelles (2), un entonnoir modifié ayant un anneau circulaire denté et une rayure pour les billes (3), un anneau denté (4), un cylindre supérieur (5), un cylindre inférieur ayant une rayure pour les billes et un disque denté (5a),un moteur dans un tube ayant un capuchon et un disque denté (6), une carte électronique (7), un accumulateur (8), un interrupteur (9), et un contrepoids (10).

## Description

La présente invention a pour objet deux systèmes de cueillette des cerises, dont l'un est manuel (obtenir des cerises sans tige) et l'autre électrique (obtenir des cerises avec tige).

A l'heure actuelle, dans le commerce, il n'existe pas encore, à part d'un dispositif manuel à ressort pour cueillir une par une les pommes et d'un système de Wolf avec un sac suspendu à un manche, un quelconque système fiable d'abord pour cueillir puis stocker provisoirement les fruits, en particuliers les cerises, dans le système avant de les vider dans un panier déposé par terre.

L'objectif de cette invention est multiple. Elle cherche à mettre à la disposition aux personnes cherchant à cueillir les cerises et/ou les fruits de faibles dimensions un système à ce propos. Elle simplifie leur travail de cueillette. De plus, elle augmente la vitesse de la cueillette en faisant disparaître les différents accidents inhérents à ce type de travail. La cause de ces accidents provient de l'emploi des échelles et des chutes provoquées par la rupture facile des branches fragiles des cerisiers sous le poids des cueilleurs. En raison de la vitesse de la cueillette, le prix de vente par unité de ces fruits doit diminuer.

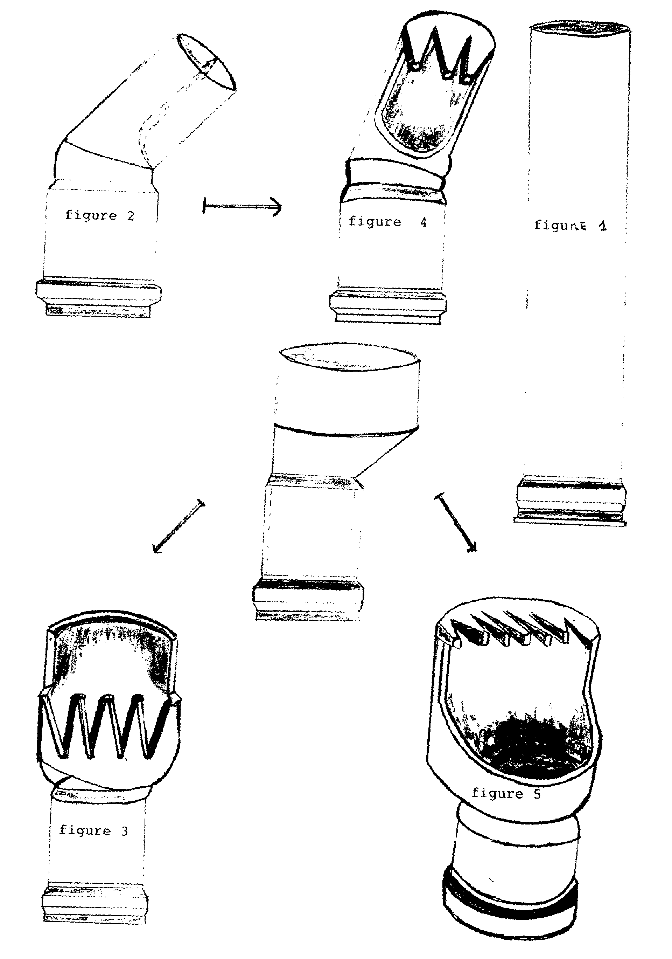

**Le système manuel est un système modulaire et se compose des pièces suivantes:**
- Un long tube en plastique (figure 1) à deux bouts femelle et mâle emboîtables. Il est à la fois le manche du système et le réservoir pour contenir les fruits cueillis. L'unité de longueur de base est un mètre et la longueur maximale est de trois mètres.
- . Un coude (figure 2) dont l'angle est d'environ 120 degrés. Un de ses deux bouts emboîtables est femelle et l'autre mâle. Il est la partie intermédiaire entre le long tube et l'entonnoir du système. Sa fonction est de permettre de voir les cerises à cueillir.
- . Un entonnoir modifié en plastique dure (figures 3, 4, 5) permet à la fois de recevoir les fruits à cueillir et de les prendre, par un mouvement en avant ou en arrière du long tube, par biais d'une plaque dentée en plastique incorporée à son bord supérieur.

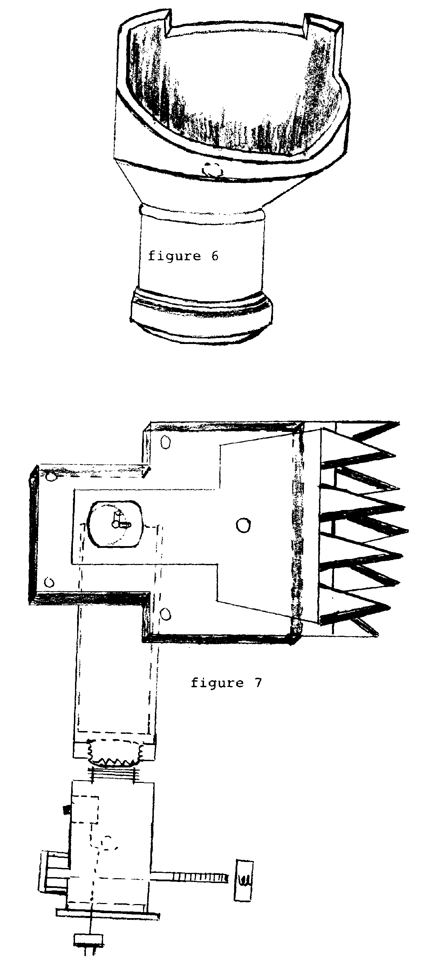

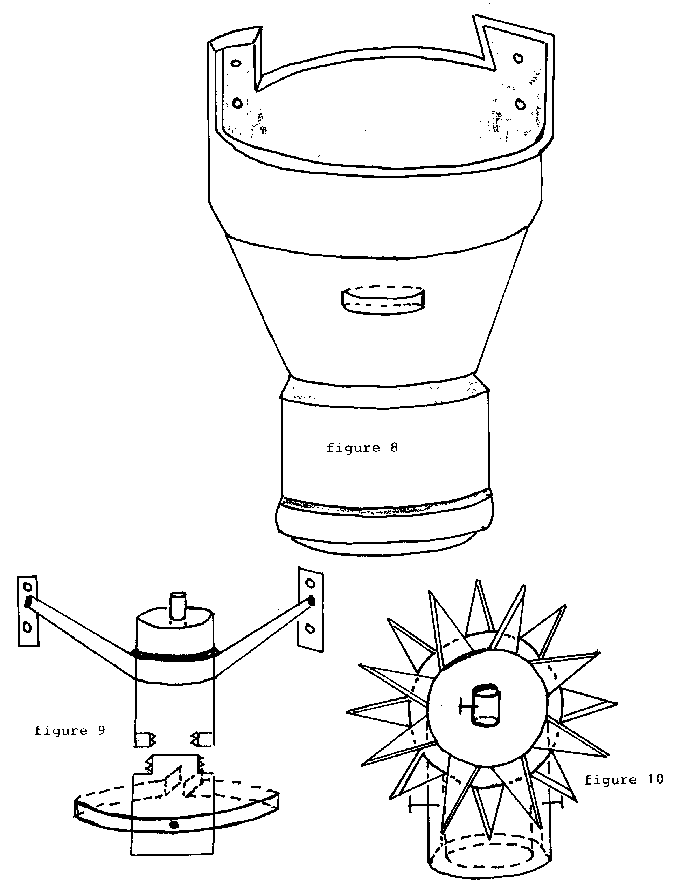

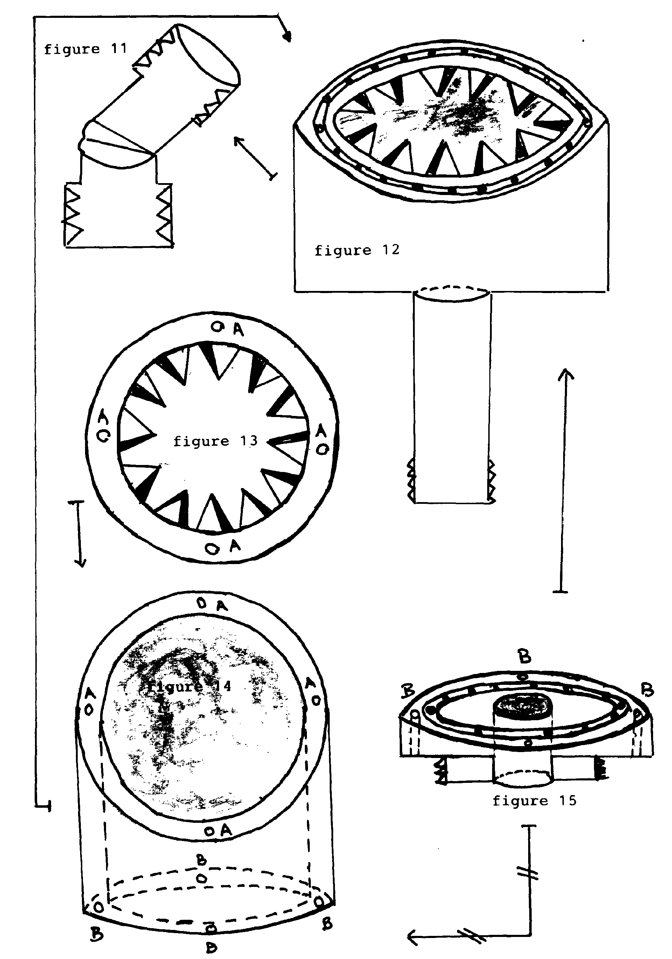

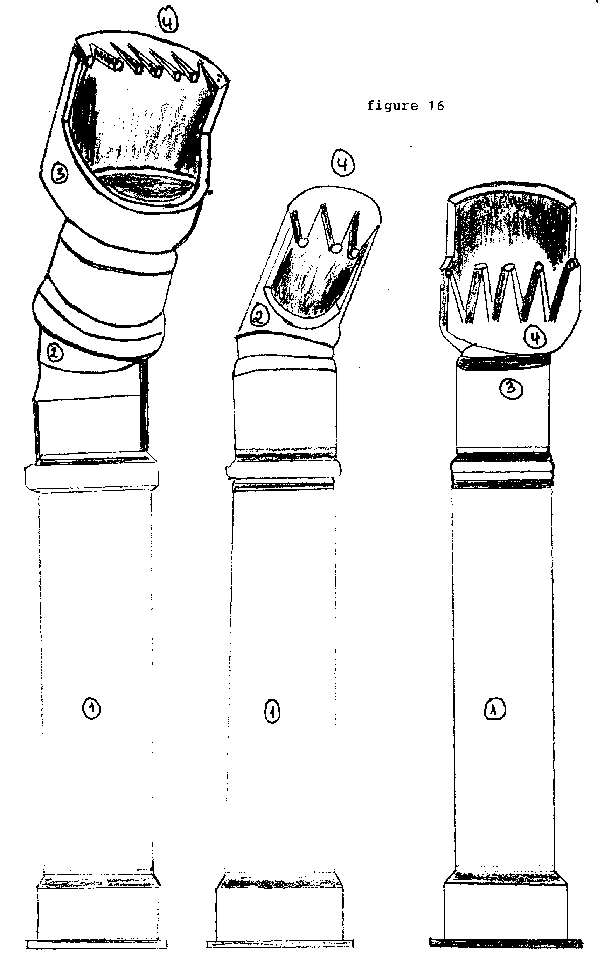

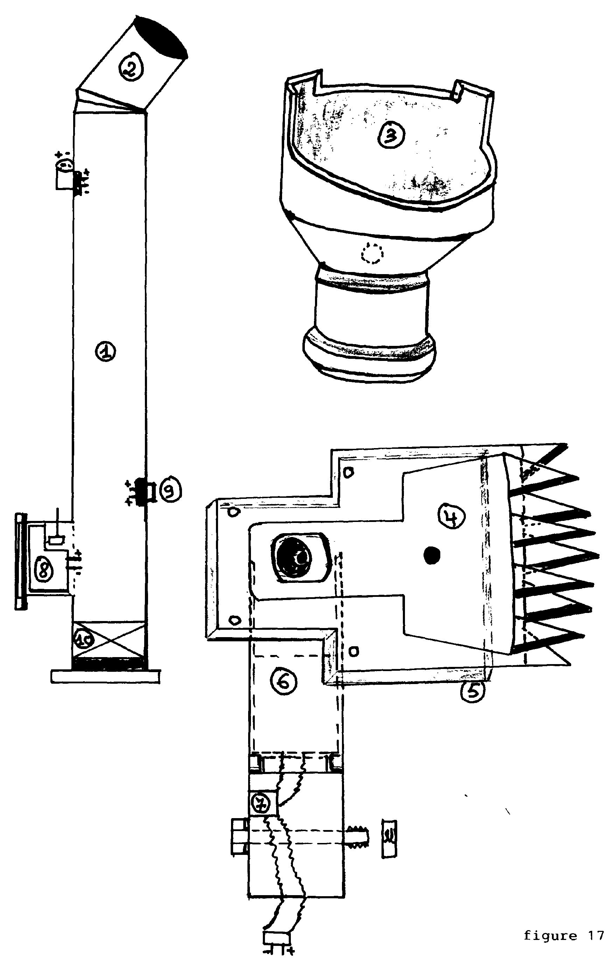

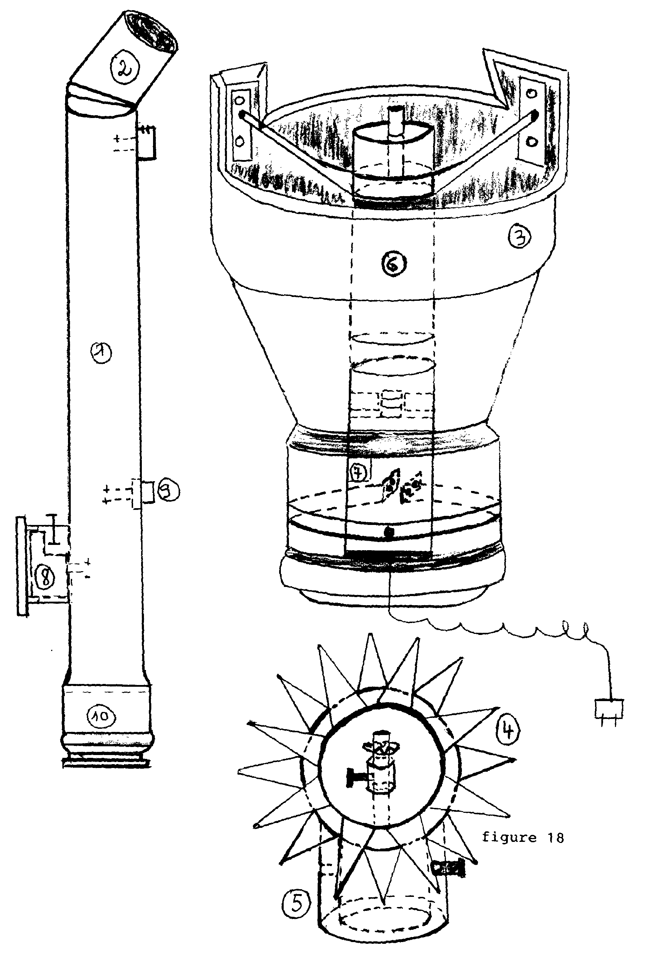

**Le système électrique est un système modulaire et se compose des pièces suivantes:**
- Un long tube en plastique (figures 1) à deux bouts femelle et mâle emboîtables . Il est à la fois le manche du système et le réservoir pour contenir les fruits cueillis. L'unité de longueur de base est un mètre. La longue maximale est de trois mètres
- . Un coude (figure 2) dont l'angle est d'environ 120 degrés. Un de ses deux bouts emboîtables est femelle et l'autre mâle ou deux bouts sont femelles (figure 11). Il est la partie intermédiaire entre le long tube et l'entonnoir du système. Sa fonction est de permettre de voir les cerises à cueillir.
- . Un entonnoir modifié en plastique dur ayant trois variances (figures 6, 8 et 12) permet à la fois de recevoir les fruits à cueillir et un dispositif de coupe. Ce dernier possède trois variances **A1, A2 et A3** selon la position extérieure ou intérieure du moteur par rapport à l'entonnoir.

**-. Le dispositif de coupe de variance A1 un peu lourd (figure 7) comprend les pièces suivantes:**
1.- Un petit tube en plastique, composé de deux parties supérieure et inférieure vissées ensemble à l'intérieur. La partie supérieure, ayant une plaque en plastique pour fixer ensemble grâce aux quatre vis les deux lames de ciseaux, contient le moteur avec son réducteur. La partie inférieure contient une carte électronique pour contrôler le moteur et un trou transversal. Le tout est fixé à l'entonnoir grâce à un écrou.
2.- Deux lames de ciseaux dentées, l'une sur l'autre. Ces deux lames sont fixées sur la plaque en plastique en laissant traverser la tige motrice du moteur.
3.- Pour faire tourner la lame supérieure de ciseaux dans un mouvement de va et vient, un disque en acier inoxydable, dont l'axe est au bord, est enfilé et fixé par une vis à la tige motrice du moteur,
4.- Un moteur électrique couplé à son réducteur logé dans la partie supérieure du petit tube.
5.- Une carte électronique logée dans la partie inférieure du petit tube pour contrôler le moteur.
6.- Un accumulateur rechargeable se trouvant à l'autre bout du long tube.
7.- Un interrupteur se trouvant à une certaine distance de l'autre bout du long tube.
8.- Un contrepoids approprié se trouvant à l'autre bout du long tube.

**. Le dispositif de coupe de variance A2 (figures 9 et 10), moins lourd que celui de la variance A1, comprend les pièces suivantes:**
1.- Un petit tube en plastique, composé de deux parties supérieure et inférieure vissées ensemble à l'intérieur. La partie supérieure, ayant deux bras en plastique partant du fond de l'entonnoir et arrivant à son bord supérieur pour y être fixée par quatre vis, contient le moteur avec son réducteur. La partie inférieure contient une carte électronique pour contrôler le moteur et un trou transversal pour être fixée par biais d'un écrou à l'entonnoir.
2.- Deux lames de ciseaux dentées circulaires (figure 10), l'une sur l'autre. Chaque lame a son propre capuchon soit pour être fixé au tube contenant le moteur (lame inférieure), soit pour être fixé à la tige motrice du moteur (lame supérieure).
3.- Un moteur électrique couplé à son réducteur logé dans la partie supérieure du petit tube.
4.- Une carte électronique logée dans la partie inférieure du petit tube pour contrôler le moteur.
5.- Un accumulateur rechargeable se trouvant à l'autre bout du long tube.
6.- Un interrupteur se trouvant à une certaine distance de l'autre bout du long tube.
7.- Un contrepoids approprié se trouvant à l'autre bout du long tube.

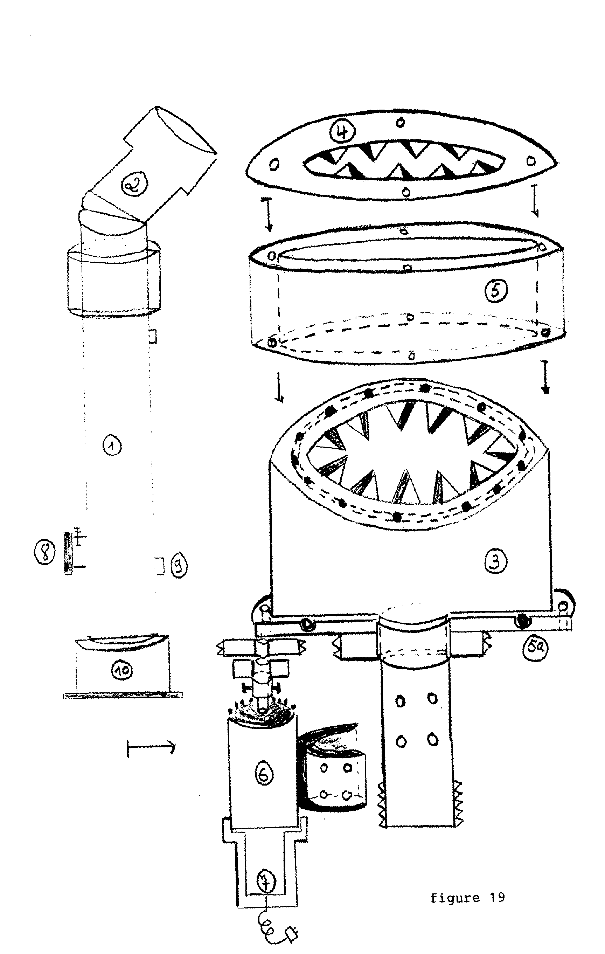

### -. Le dispositif de coupe de variance A3 (figures 12, 13, 14, 15 et No 6 de la figure 19), extrêmement léger, comprend les pièces suivantes:

1.- Un entonnoir qui possède à son bord supérieur un anneau denté qui sera la lame circulaire inférieure de ciseaux. Cet anneau a, en outre, une rayure circulaire pour contenir les billes à rouler (figure 12)
2.- Un anneau denté à l'intérieur (figure 13). Il doit être fixé sur le cylindre (figure 14) afin de constituer la lame supérieure de ciseaux, une fois que ce cylindre avec l'anneau à son bord supérieur emboîte l'entonnoir.
3.- Un autre anneau (figure 15). Il doit être glissé du bas vers le haut de l'entonnoir pour être fixé au pied du cylindre (figure 14), une fois que ce dernier emboîte l'entonnoir. Il possède, en outre, une rayure circulaire pour contenir les billes à rouler et à sa surface inférieure un disque denté. Ce dernier sera actionné par le disque denté du moteur et l'ensemble des pièces (figures 15, 14, 13) tourne autour de l'entonnoir et coupe tout ce qui se trouve entre les dents des ciseaux. C'est un roulement à billes.
4.- Un moteur électrique couplé à son réducteur logé dans la partie supérieure du petit tube (No 6 de la figure 19).
5.- Une carte électronique logée dans la partie inférieure du petit tube pour contrôler le moteur.
6.- Un accumulateur rechargeable se trouvant à l'autre bout du long tube.
7.- Un interrupteur se trouvant à une certaine distance de l'autre bout du long tube.
8.- Un contrepoids approprié se trouvant à l'autre bout du long tube.

Ci dessous, quelques variantes d'exécution du système de cueillette des fruits de petites dimensions, en particuliers les cerises:
a.- Longueur du long tube est variable.
b.- La matière peut être en métal léger.
c.- Les lames de ciseaux peuvent avoir des dimensions variables.

## Revendications

1. **SYSTEME MANUEL DE CUEILLETTE DES CERISES NE DEVANT PAS GARDER LEUR TIGE (d'autres fruits de petites tailles)**

2. **SYSTEME ELECTRIQUE DE CUEILLETTE DES CERISES DEVANT GARDER LEUR TIGE**
**I- SYSTEME MANUEL**
C'est un système manuel de cueillette des cerises **ne devant pas garder leur tige.** Il assume à la fois, pour leur cueillette sans les toucher à aucun moment, deux fonctions
A.- Cueillir les cerises à longue distance, sans avoir besoin d'une échelle et avec grande vitesse, en restant par terre et gardant toute la liberté de mouvements d'un promeneur sous un arbre. Ce système peut, en outre, opérer pour les cerises qui ne peuvent pas être atteintes même par une échelle (cerises se trouvant au bout de leurs longues branches fragiles).
B.- Assumer le rôle de réservoir provisoire destiné aux cerises cueillies.
Il comprend trois composantes suivantes:
1.- Un long tube en plastique léger (bouts femelle et mâle, figure 1), de longueur adaptable selon la hauteur des cerisiers, de diamètre de base 5cm. Il sert à la fois de manche du système et de réservoir pour garder les cerises en quantité suffisante avant de les vider, par un mouvement d'inclination du tube en dirigeant son extrémité sur un grand panier déposé par terre.
2.- Un coude en plastique (bouts femelle et mâle ou deux bouts femelles, figure 2), emboîtable au tube et à un entonnoir. Sa fonction est de permettre la vision et le contrôle de la position des tiges des cerises lors de leur cueillette.
3.- Un entonnoir en plastique (bout femelle) modifié (plusieurs formes et dimensions, figures 3, 4, 5), emboîtable au coude, dont la moitié de la surface d'ouverture contient une rangée de dents rondes en scie pour coincer les cerises, sans les blesser, avant de les détacher soit par un mouvement en avant soit par un mouvement en arrière du long tube selon la manière de disposer les dents sur l'entonnoir.
**II SYSTEME ELECTRIQUE**
C'est un système électrique de cueillette des cerises devant garder leur tige. Il assume, pour leur cueillette sans les toucher à aucun moment, à la fois deux fonctions:
A.- Cueillir les cerises à longue distance, sans avoir besoin d'une échelle et avec grande vitesse, en restant par terre et gardant toute la liberté de mouvements d'un promeneur sous un arbre. Ce système peut, en outre, opérer pour les cerises qui ne peuvent pas être atteintes même par une échelle (cerises se trouvant au bout de leurs longues branches fragiles)
B.- Assumer le rôle de réservoir provisoire destiné aux cerises cueillies.
Il comprend quatre composantes suivantes:
1.- Un long tube en plastique léger (bouts femelle et mâle, figure 1), de longueur adaptable selon la hauteur des cerisiers, de diamètre de base 5cm. Il sert à la fois de tige du système et de réservoir pour garder les cerises en quantité suffisante avant de les vider, par un mouvement d'inclination du tube dirigeant son extrémité sur un grand panier déposé par terre.
2.- Un coude en plastique (bouts femelle et mâle ou deux bouts femelles, figures 2, 12) emboîtable au tube et à un entonnoir. Il permet la vision et le contrôle de la position des tiges des cerises lors de leur cueillette.
3.- Un entonnoir en plastique (bout femelle ou mâle) modifié (plusieurs formes et dimensions, figures 6, 8 et 12), emboîtable au coude, dont la paroi est modifiée pour l'entrée des cerises destinées à être cueillies et pour recevoir le dispositif de coupe. Ce dernier possède trois variances **A1, A2 et A3** selon la position à l'intérieur ou à l'extérieur du moteur par rapport à l'entonnoir.
4. **A1**.- Dispositif de coupe comprend (variance extérieure **A1**):
a.- Un petit tube en plastique (figure 7), composé de deux parties inférieure et supérieure qu'on peut visser ensemble, pas trop long pour loger le moteur électrique avec son réducteur et la carte électronique pour contrôler le moteur.
b.- Une plaque en plastique au bord supérieur du tube (figure 7) pour fixer les deux lames de ciseaux.
c.- Deux lames de ciseaux (figure 7), l'une sur l'autre, ayant plusieurs dents horizontales.
d.- Un moteur électrique couplé à son réducteur. Il se loge dans la partie supérieure du tube (figure 7).
e.- Une carte électronique pour contrôler le moteur (figure 7). Elle se loge dans sa partie inférieure.
f.- Un accumulateur rechargeable se trouvant à l'autre bout du long tube (figure 17).
g.- Un interrupteur se trouvant aussi à l'autre bout du long tube et près de l'accumulateur (figure 17).
h.- Un contrepoids se trouvant à l'autre bout du long tube à côté de l'accumulateur (figure 17).
4. A2. - Dispositif de coupe (variance A2) comprend :
a.- Un petit tube en plastique (figure 9), composé de deux parties inférieure et supérieure qu'on peut visser ensemble, pas trop court pour loger le moteur électrique avec son réducteur et la carte électronique pour contrôler le moteur. Ce tube possède deux bras pour être fixé à l'intérieure de l'entonnoir et à son bord supérieur.
b.- Deux lames de ciseaux circulaires (figure 10), l'une sur l'autre, ayant plusieurs dents horizontales. Ces lames sont fixées grâce à deux cylindres faisant partie compacte des lames.
c.- Un moteur électrique couplé à son réducteur. Il se loge dans la partie supérieure du tube (figure 9).
d.- Une carte électronique pour contrôler le moteur. Elle se loge dans sa partie inférieure (figure 9).
e. - Un accumulateur rechargeable se trouvant à l'autre bout du long tube (No 8 de la figure 18).
f. - Un interrupteur se trouvant aussi à l'autre bout du long tube et près de l'accumulateur (No 9 de la figure 18).
g .- Un contrepoids se trouvant à l'autre bout du long tube à côté de l'accumulateur (No 10 de la figure 18).
4. **A3.** - Dispositif de coupe (variance **A3,** figures 12, 13, 14, 15 et No 6 de la figure 19) comprend:
a.- Un petit tube en plastique (No 6 de la figure 19), composé de deux parties inférieure et supérieure qu'on peut visser ensemble, pas trop court pour loger le moteur électrique avec son réducteur et la carte électronique pour contrôler le moteur. Ce tube possède un bout d'un demi cylindre pour être fixé à l'entonnoir. De plus il possède un disque denté pour actionner les ciseaux.
b.- Un entonnoir ayant à son bord supérieur un anneau denté à l'intérieur (figure 12) servant de lame circulaire inférieure des ciseaux. Il contient une rayure circulaire pour contenir les billes.
c.- Un anneau denté à l'intérieur (figure 13) qui doit être fixé sur le cylindre (figure 14) pour devenir la lame circulaire supérieure des ciseaux, une fois que ce cylindre ayant son anneau à son bord supérieur emboîte l'entonnoir.
d.- Un autre cylindre qui (figure 15), après avoir glissé dans le bout inférieur de l'entonnoir (figure 12) doit être fixé à la base du premier cylindre (figure 14) une fois que ce dernier emboîte l'entonnoir. Il possède en outre une rayure pour contenir les billes et un disque denté incorporé à sa base.
e.- Un moteur logé dans la partie supérieure du petit tube (No 6 de la figure 19).
f- Un accumulateur rechargeable se trouvant à l'autre bout du long tube (No 8 de la figure 19).
g. - Un interrupteur se trouvant aussi à l'autre bout du long tube et près de l'accumulateur (No 9 de la figure 19).
h.- Un contrepoids se trouvant à l'autre bout du long tube à côté de l'accumulateur (No 10 de la figure 19).
